# EUROPÄISCHE PATENTSCHRIFT

(11) **EP 1 637 431 B1**
(45) Veröffentlichungstag und Bekanntmachung des Hinweises auf die Patenterteilung: **20.08.2014**
(21) Anmeldenummer: 05027431.5
(22) Anmeldetag: 14.10.2003
(51) Int. Cl.: B62D 1/10, B62D 1/16

(54) **Lenksäulenanordnung**
Steering column arrangement
Agencement de colonne de direction

(30) Priorität: 18.12.2002 DE 10259167
(43) Veröffentlichungstag der Anmeldung: 22.03.2006
(62) Teilanmeldung aus: 03813088.6
(73) Patentinhaber: Daimler AG, 70327 Stuttgart (DE)
(72) Erfinder: Hebenstreit, Axel, 70193 Stuttgart (DE); Löffler, Hans-Dieter, 72766 Reutlingen (DE); Mauch, Markus, 73773 Aichwald (DE)
(74) Vertreter: JENSEN & SON

(56) Entgegenhaltungen:
- EP-A2- 1 403 168
- DE-A1- 2 810 790
- DE-C- 3 940 391
- DE-C1- 10 205 270

## Beschreibung

Die Erfindung betrifft eine Zentriereinrichtung gemäß dem Oberbegriff des Patentanspruchs 1.

Aus der DE 28 10 790 A1 ist ein Lenkstockschalter für Kraftfahrzeuge bekannt. Dieser Lenkstockschalter wird von einem Trägergehäuse gebildet, das einen rohrförmigen Ansatz aufweist, der in das Mantelrohr einer Lenkung eingesteckt ist. Durch eine oder mehrere Schrauben ist das Mantelrohr mit dem Ansatz fest verbunden.

Ferner beschreibt die DE 39 40 391 C1 eine Lenkvorrichtung für Fahrzeuge, bei der im Lenkrad ein Mittelteil angeordnet sein kann, das als Prallplatte, Instrumententräger oder Airbagaufnahmebehälter dienen kann. Das Mittelteil ist von einem Halteteil an der Lenksäule festgehalten. Über die Verbindung des Halteteils mit der Lenksäule sind keine genaueren Angaben enthalten.

Aus der nicht vorveröffentlichen EP 1 403 168 A2 ist eine Einrichtung zum Befestigen eines Mantelrohrschaltermoduls am Mantelrohr einer Lenkspindel eines Kraftfahrzeugs bekannt. Ein Träger des Mantelrohrschaltermoduls umschließt das Ende des Mantelrohrs koaxial. Zwischen dem Träger und dem Mantelrohr ist ein hülsenförmiger Klemmkörper mit mehreren Klemmzungen vorgesehen, die beim Aufschieben des Trägers über das Ende des Mantelrohrs eine Klemmkraft zum Festsetzen des Trägers des Mantelrohrschaltermoduls hervorrufen. Eine Zentriereinrichtung mit Klemmbacken, die über ein Federelement mit einem Stator verbunden sind, geht aus der EP 1 403 168 A2 nicht hervor.

Es ist Aufgabe der Erfindung, eine Zentriereinrichtung zu schaffen, die die Montage eines Schaltermoduls vereinfacht und einen zuverlässigen Anschluss des Schaltermoduls an das Lenkrad gewährleistet.

Die Aufgabe wird erfindungsgemäß mit den Merkmalen des Patentanspruchs 1 gelöst.

Ein Schaltermodul mit der erfindungsgemäßen Zentriereinrichtung stützt sich über das Lager auf der Lenkspindel ab. Durch Einwirkung einer koaxial zur Längsachse der Lenkspindel gerichteten Kraft auf die Zentriereinrichtung wird es ermöglicht, dass das Schaltermodul bei der Montage in axialer Richtung bis in eine Endlage bewegt wird und sich dabei selbsttätig radial ausrichtet. Die Zentriereinrichtung umfasst einen Stator und Klemmbacken, die beim Aufbringen der axialen Kraft derart zusammenwirken, dass sich das Schaltermodul selbsttätig auf dem Mantelrohr zentriert. Zur gleichmäßigen Einleitung der axial wirkenden Kraft auf die Klemmbacken ist der Stator über jeweils ein Federelement mit jeder Klemmbacke verbunden sein. Von Vorteil dabei ist, dass nur ein Verfahrensschritt, nämlich das Aufbringen einer koaxial wirkenden Kraft, ausreicht, um das Schaltermodul an dem Mantelrohr zu befestigen. Gleichzeitig wird durch das Aufbringen der axialen Kraft das Schaltermodul an das Lenkrad gezogen, so dass keine axiale Bewegung zwischen Schaltermodul und Lenkrad erfolgen kann. Hinzu kommt, dass ein Verdrehen oder Verkanten des Schaltermoduls nahezu ausgeschlossen werden kann, so dass damit der beispielsweise im Schaltermodul integrierte Lenkwinkelsensor fehlerfrei montiert ist. Des Weiteren weist die Zentriereinrichtung gemäß der Erfindung eine an der dem Mantelrohr zugewandten Fläche der Klemmbacke abstehende Erhebung auf, die durch das Zusammenwirken der schrägen Flächen unter der axial gerichteten Kraft F bei der Montage mehr oder weniger stark radial an das Mantelrohr gepresst wird, was einen sicheren Halt des Schaltermoduls auf dem Mantelrohr und eine selbsttätige Zentrierung des gesamten Schaltermoduls bewirkt.

Weitere vorteilhafte Ausgestaltungen ergeben sich aus den Unteransprüchen.

Für die Abstützung des Schaltermoduls auf der Lenkspindel kann der Stator mit dem Lager verbunden sein, so dass das Schaltermodul bei Drehung des Lenkrades unbeweglich gehalten ist.

Da jede Klemmbacke mit einem Auflager an dem Mantelrohr festgezogen wird, kann beim Einwirken der axialen Kraft eine axiale Sicherung des Schaltermoduls auf dem Mantelrohr erfolgen.

Die dem Stator zugewandte Fläche der Klemmbacke verläuft vorteilhafterweise schräg bezüglich der Längsachse der Lenkspindel, so dass der gegenläufig zur Klemmbacke bewegte Stator eine Anlage der Klemmbacke an das Mantelrohr bewirkt.

Diese Wirkung kann verstärkt werden, wenn die Innenfläche des Stators parallel zur schrägen Fläche der Klemmbacke verläuft.

Vorteilhafterweise kann die axiale Kraft mittels einer Lenkradschraube aufgebracht werden. Das hat den Vorteil, dass mit einem ohnehin notwendigen Verfahrensschritt, nämlich dem festlegen des Lenkrads an der Lenkspindel, gleichzeitig das Schaltermodul festgelegt werden kann.

Eine bevorzugte Ausgestaltungsform wird im Folgenden anhand der Zeichnung erläutert. Dabei zeigen:
- Fig. 1a: einen Längsschnitt durch eine Lenksäulenanordnung,
- Fig. 1b: eine Detaildarstellung nach Fig. 1
- Fig. 2: eine vergrößerte Darstellung gemäß Fig.1,
- Fig. 3a: eine Einzeldarstellung einer Biegefeder,
- Fig. 3b: eine Einzeldarstellung einer Aussparung.

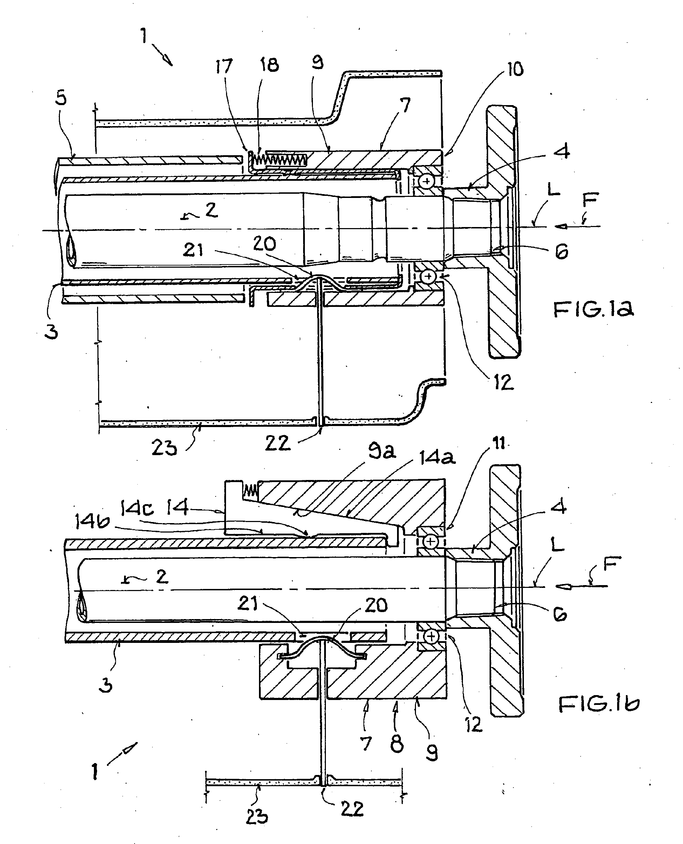

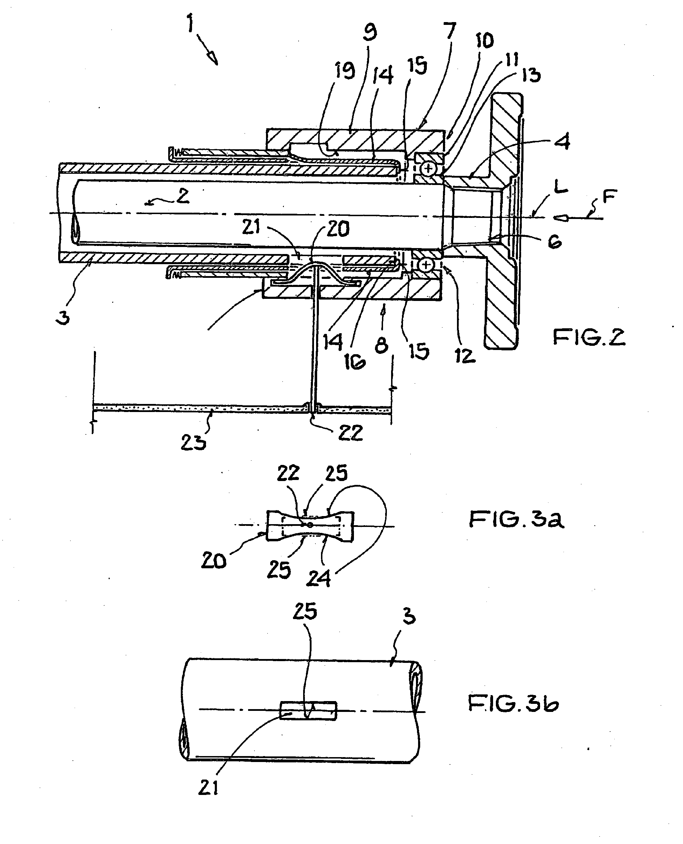

In den Fig. 1 und 2 ist eine Lenksäulenanordnung 1 mit einer Lenkspindel 2 und einem koaxial zur Lenkspindel 2 angeordneten, inneren Mantelrohr 3 in einem Längsschnitt dargestellt. Für eine Komfortverstellung eines Lenkrades, von dem hier nur eine Lenkradnabe 4 dargestellt ist, ist ein äußeres Mantelrohr 5 vorgesehen, wobei das äußere Mantelrohr 5 relativbeweglich zum inneren Mantelrohr 3 gelagert ist.

Die Lenkradnabe 4 ist koaxial zur Lenkspindel 2 auf deren, dem Fahrzeuginnenraum zugewandten Ende 6 aufgesteckt. Das Ende 6 der Lenkspindel 2 ist mit einer geraden Außenverzahnung versehen, die in eine korrespondierende Innenverzahnung der Lenkradnabe 4 eingreift, so dass eine Drehbewegung des Lenkrades auf die Lenkspindel 2 übertragen werden kann.

Auf dem inneren Mantelrohr 3 ist ein Schaltermodul 7 befestigt. Das Schaltermodul 7 dient beispielsweise zur Aufnahme eines Winkelsensors oder zur Lagerung von Schalthebeln. Dazu ist es notwendig, dass das Schaltermodul 7 gegenüber der Drehbewegung des Lenkrades bzw. der Lenkspindel 2 unbeweglich gehalten ist.

Das Schaltermodul 7 ist in den Fig. 1 und 2 mit seiner Zentriereinrichtung 8 dargestellt. Die Zentriereinrichtung 8 umfasst einen Stator 9, der als Hohlzylinder ausgebildet ist und dessen Innendurchmesser ist auf den Außendurchmesser des inneren Mantelrohrs 3 abgestimmt ist.

An dem zur Lenkradnabe 4 weisenden Ende 10 der Zentriereinrichtung 8 ist ein Außenring 11 eines Axiallagers 12 befestigt, das sich mit seinem Innenring 13 auf der Lenkspindel 2 abstützt, so dass bei drehender Lenkspindel 2 der Stator 9 unbeweglich bleibt.

In dem Stator 9 sind Klemmbacken 14 vorgesehen, die sich über den Umfang des Mantelrohrs 3 verteilen und die mit einem winkelförmigen Auflager 15 an der vorderen Stirnseite 16 des Mantelrohrs 3 anliegen. Die Klemmbacken 14 sind mit einem Ende 17 über Federelemente 18 an dem Stator 9 derart gelagert, dass bei Einwirkung einer axialen Kraft gemäß Pfeil F auf den Stator 9 über die in dem Stator 9 eingelassenen Federelemente 18 die Kraft F in die Klemmbacken 14 eingeleitet wird. Durch das winkelförmige Auflager 15 werden die Klemmbacken 14 gleichmäßig über den Umfang des Mantelrohrs 3 angezogen, so dass eine Zentrierung aller Klemmbacken 14 über den Umfang des Mantelrohrs 3 erfolgt.

Wie insbesondere aus der Detaildarstellung in Fig. 1b hervorgeht, verläuft die dem Stator 9 zugewandte Fläche 14a der Klemmbacke 14 schräg bezüglich der Längsachse L der Lenkspindel 2, so dass der gegenläufig zur Klemmbacke 14 bewegte Stator 9 eine Anlage der Klemmbacke 14 an das Mantelrohr 3 bewirkt. Diese Wirkung wird verstärkt, wenn die Innenfläche 9a des Stators 9 parallel zur schrägen Fläche 14a der Klemmbacke 14 verläuft. An der dem Mantelrohr 3 zugewandten Fläche 14b ist eine Erhebung 14c vorgesehen, die sich -je weiter der Stator 9 gemäß Pfeilrichtung F vorgetrieben wird- durch die Anlage der schrägen Flächen 9a und 14a an das Mantelrohr 3 presst und dadurch eine selbsttätige Zentrierung des gesamten Schaltermoduls 7 bewirkt.

Für eine tangentiale Sicherung des Schaltermoduls 7 ist in der Innenwand 19 des Stators 9 eine Biegefeder 20 befestigt. Korrespondierend dazu ist, wie aus den Fig. 3a und 3b hervorgeht, in dem Mantelrohr 3 eine Aussparung 21 vorgesehen.

Die Biegefeder 20 ist im Mittelbereich konkav ausgebildet, so dass sich die Biegefeder 20 selbsttätig in der Aussparung 21 zentriert, um keine Toleranzen in der radialen Verdrehung des Schaltermoduls 7 zuzulassen. Bei entsprechender Vorspannung der Biegefeder 21 tritt diese immer soweit durch die Aussparung, bis sie mit ihren Flanken 24 an den Rändern 25 der Aussparung 21 anliegt.

An der Unterseite der Biegefeder 20 ist ein Kontrollpin 22 befestigt, der in einer Verkleidung 23 der Lenksäulenanordnung 1 geführt ist. Je nach Position der Biegefeder 20 ragt der Kontrollpin 22 durch die Verkleidung 23 hindurch oder schließt mit der Verkleidung 23 bündig ab, so dass durch visuelle Kontrolle die korrekte Lage der Biegefeder 20 in der Aussparung 23 festgestellt werden kann.

Die Montage des Schaltermoduls 7 erfolgt folgendermaßen:

Das Schaltermodul 7 wird koaxial auf das Mantelrohr 3 aufgesteckt bis die Biegefeder 20 mit der Aussparung 21 in Eingriff kommt. Anschließend wird das Lenkrad mit der Lenkradnabe 4 auf das vordere Ende 6 der Lenkspindel 2 montiert. Das Lenkrad kann beispielsweise über einen Blockzahn der geraden Außenverzahnung der Lenkspindel 2, der mit einem freigeräumten Zahn der Innenverzahnung der Lenkradnabe 4 korrespondiert, zur Lenkspindel ausgerichtet werden. Durch die eindeutige radiale Ausrichtung zwischen Lenkrad, Lenkspindel und Schaltermodul 7 wird ein am Lenkrad vorgesehener Kontaktstecker immer montagesicher in einen Stecker des Schaltermoduls 7 eingreifen. Das Lenkrad wird mittels einer koaxial zur Längsachse L der Lenkspindel 2 angeordneten, die Lenkradnabe 4 durchsetzenden Lenkradschraube (nicht dargestellt) mit einer definierten Kraft F angezogen. Diese Kraft F bewirkt, dass über das Axiallager 12 der Stator 9 des Schaltermoduls 7 beaufschlagt wird und eine Einleitung der Kraft F auf die Klemmbacken 14 erfolgt. Die dadurch auf das Auflager 15 der Klemmbacken 14 wirkende Kraft sowie das Zusammenwirken der Schrägflächen zwischen Klemmbacken 14 in Stator 9 ermöglicht eine selbsttätige Zentrierung und radiale Verspannung der Klemmbacken 14 auf das Mantelrohr 3, so dass das Schaltermodul axial gesichert ist. Gleichzeitig mit dem Anziehen des Schaltermoduls 7 in axialer Richtung wird die Biegefeder 20 in der Aussparung 21 zentriert, so dass eine radiale Sicherung erfolgt. Der Kontrollpin 22 bewegt sich, sobald die Biegefeder 2 in die Aussparung 21 eintritt, von einer erhabenen über die Verkleidung 23 überstehenden Position in eine abgesenkte Position. Der Monteur kann somit kontrollieren, ob das Schaltermodul 7 ordnungsgemäß mit der Biegefeder 20 in der Aussparung 21 verrastet. Nach der Montage des Lenkrads bzw. Schaltermoduls 7 erfolgt die Verkabelung eines im Lenkrad untergebrachten Airbags.

Die Anzahl der Klemmbacken 14 kann frei gewählt werden, wobei 3 Klemmbacken ausreichen, um das Schaltermodul 7 auf dem Mantelrohr 3 axial zu sichern. Jeder Klemmbacke 14 sollte ein Federelement 15 zugeordnet sein. Für die radiale Sicherung können auch mehrere Biegefedern 20 vorgesehen sein.

## Patentansprüche

1. Zentriereinrichtung für ein Schaltermodul (7), das auf einem Mantelrohr (3) radial und axial festgelegt wird, wobei sich das Schaltermodul (7) auf einem auf einer Lenkspindel (2) angeordneten Axiallager (12) abstützt,
**dadurch gekennzeichnet,**
**dass**
- die Zentriereinrichtung (8) einen Stator (9) und Klemmbacken (14) umfasst,
- der Stator (9) über jeweils ein Federelement (18) mit jeder Klemmbacke (14) verbunden ist,
- die Zentriereinrichtung (8) bei Einwirkung einer koaxial zur Längsachse (L) der Lenkspindel (2) gerichteten Kraft (F) das Schaltermodul (7) auf dem Mantelrohr (3) festlegt,
**und dass an der dem Mantelrohr (3) zugewandten Fläche (14b) der Klemmbacke (14) eine Erhebung (14c) absteht, die durch das Zusammenwirken der schrägen Flächen (9a) und (14a) unter der axial gerichteten Kraft F radial** an das Mantelrohr (3) gepresst wird.

2. Zentriereinrichtung nach Anspruch 1,
**dadurch gekennzeichnet,**
**dass** das der Stator (9) mit dem Lager (12) verbunden ist.

3. Zentriereinrichtung nach Anspruch 1,
**dadurch gekennzeichnet,**
**dass** jede Klemmbacke (14) mit einem Auflager (15) an dem Mantelrohr (3) aufliegt.

4. Zentriereinrichtung nach Anspruch 1,
**dadurch gekennzeichnet,**
**dass** die dem Stator (9) zugewandte Fläche (14a) der Klemmbacke (14) schräg bezüglich der Längsachse (L) der Lenkspindel (2) verläuft.

5. Zentriereinrichtung nach Anspruch 4,
**dadurch gekennzeichnet,**
**dass** die Innenfläche (9a) des Stators (9) parallel zur schrägen Fläche (14a) der Klemmbacke (14) verläuft.

6. Zentriereinrichtung nach Anspruch 1,
**dadurch gekennzeichnet,**
**dass** die axiale Kraft (F) mittels einer Lenkradschraube aufbringbar ist.

## Claims

1. Centring device for a control module (7) which is radially and axially fixed on a tubular jacket (3), wherein the control module (7) is supported on an axial bearing (12) arranged on a steering shaft (2),
**characterised in that**
- the centring device (8) comprises a stator (9) and clamping jaws (14),
- the stator (9) is connected via a respective spring element (18) to each clamping jaw (14),
- the centring device (8) fixes the control module (7) on the tubular jacket (3) upon application of a force (F) directed coaxially with respect to the longitudinal axis (L) of the steering shaft (2),
- and an elevation (14c) stands away on the face (14b) of the clamping jaw (14) facing towards the tubular jacket (3), said elevation (14c) being pressed through the cooperation of the inclined faces (9a) and (14a) under the axially orientated force F radially against the tubular jacket (3).

2. Centring device according to claim 1,
**characterised in that**
the stator (9) is connected to the bearing (12).

3. Centring device according to claim 1,
**characterised in that**
each clamping jaw (14) lies with a bearing support (15) against the tubular jacket (3).

4. Centring device according to claim 1,
**characterised in that**
the face (14a), facing towards the stator (9), of the clamping jaw (14) extends in an inclined manner with respect to the longitudinal axis (L) of the steering shaft (2).

5. Centring device according to claim 4,
**characterised in that**
the inner face (9a) of the stator (9) extends parallel to the inclined face (14a) of the clamping jaw (14).

6. Centring device according to claim 1,
**characterised in that**
the axial force (F) can be applied by means of a steering wheel bolt.

## Revendications

1. Dispositif de centrage pour un module commutateur (7), qui est fixé radialement et axialement sur un tube de colonne de direction (3), le module commutateur (7) s'appuyant sur un palier lisse de butée (12) disposé sur un arbre de direction (2), **caractérisé en ce que**
- le dispositif de centrage (8) comprend un stator (9) et des mâchoires de serrage (14),
- le stator (9) est relié à chaque mâchoire de serrage par un élément de ressort (18),
- le dispositif de centrage (8) fixe le module commutateur (7) sous l'effet d'une force orientée coaxialement à l'axe longitudinal (L) de l'arbre de direction (2) sur le tube de colonne de direction (3),
et **en ce qu'**une saillie (14c) est éloignée sur la surface (14b) de la mâchoire de serrage (14) orientée vers le tube de colonne de direction (3), ladite saillie est serrée radialement par la force (F) orientée axialement sur le tube de colonne de direction (3) par la coopération des surfaces obliques (9a) et (14a).

2. Dispositif de centrage selon la revendication 1, **caractérisé en ce que** le stator (9) est relié au support (12).

3. Dispositif selon la revendication 1, **caractérisé en ce que** chaque mâchoire de serrage (14) repose sur le tube de colonne de direction (3) au moyen d'un support (15).

4. Dispositif de centrage selon la revendication 1, **caractérisé en ce que** la surface (14a) de la mâchoire de serrage (15) orientée vers le stator (9) s'étend obliquement par rapport à l'axe longitudinal (L) de l'arbre de direction (2).

5. (Dispositif de centrage selon la revendication 4, **caractérisé en ce que** la surface intérieure (9a) du stator (9) s'étend parallèlement avec la surface oblique (14a) de la mâchoire de serrage (14).

6. Dispositif de centrage selon la revendication 1, **caractérisé en ce que** la force axiale (F) peut être appliquée au moyen d'une vis de volant.
